# EUROPEAN PATENT APPLICATION

(11) **EP 2 615 581 A1**
(43) Date of publication of application: **17.07.2013**
(21) Application number: 12305034.6
(22) Date of filing: 10.01.2012
(51) Int. Cl.: G06T 7/00

(54) **Authoring method and system for extracting a foreground object from a video sequence**

(71) Applicant: Alcatel Lucent, 75007 Paris (FR)
(72) Inventor: Nouri, Marwen, 91620 NOZAY (FR); Delegue, Gérard, 91620 NOZAY (FR)
(74) Representative: Hervouet, Sylvie

(57) **Abstract**

An authoring method, for extracting a foreground object (3) from a video sequence (1) comprising the following steps:
- displaying an image (2) of said video sequence (1) to a user,
- pointing said object (3) to extract by detecting the user drawing at least one scribble (5-7) onto said object (3),
- propagating said at least one scribble (5-7) through each successive image (2) of said video sequence (1),
- using said at least one drawn or propagated scribble (5-7) to constraint an extraction of said pointed object (3) from each said successive image (2).

## Description

The technical domain is the domain of video sequence authoring. Particularly it concerns a method and a system to extract a foreground object from a video sequence.

The aim is to extract a selected foreground object from a video sequence out of its background, to e.g. replace it over a different background. By doing so, a user can create new video contents.

Some image or video authoring systems are able to extract a foreground object. However they are either too complicated to use or/and they can need a long learning process before they can be used. Also they often need a lot of computing power and are not able to extract a foreground object in real time. The result is they are not well adapted to new small devices such as smart-phones or mobile pads.

Some extracting methods are fine to extract an object from an image. But when applied to a video sequence such methods need to be re-applied to each image, that is, about to 25 times per second. Such methods then become rather repetitive and thus boring for a user.

An embodiment addresses and solves this problem without the drawbacks of prior art.

The object of an embodiment is an authoring method, for extracting a foreground object from a video sequence comprising the steps of: displaying an image of said video sequence to a user, pointing said foreground object to extract by detecting the user drawing at least one scribble onto said object, propagating said at least one scribble through each successive image of said video sequence, using said at least one drawn or propagated scribble to constraint an extraction of said pointed foreground object from each said successive image.

According to another feature, said propagating step comprises: discretizing a scribble into a set of points, estimating a new position for each point in said set of points in the next image of said video sequence, by selecting the point that minimizes a global energy function, expressed as a sum of at least one elementary energy weighted by weights, repeating said estimating step recursively through the following successive images of said video sequence.

According to another feature, one of said elementary energy comprises a uniformity energy expressed by comparing a spatial distance between a point and its spatial successor in said set of points with the average value of the distance between two spatially successive points in said set of points, according to the formula E_{unif}(i,t) = Avg_{j=∀i}(dₛ(Pⱼ,ₜ₊₁,Pⱼ₊₁,ₜ₊₁)) - dₛ(Pᵢ,ₜ₊₁,Pᵢ₊₁,ₜ₊₁).

According to another feature, one of said elementary energy comprises a curvilinear energy expressed by the squared sum of a first spatial coordinate of a first vector joining a spatial antecedent of a point to said point and a first spatial coordinates of a second vector joining said point to its spatial successor, divided by the squared sum of a second spatial coordinate of said first vector and a second spatial coordinate of said second vector, according to the formula E_{curv}(i,t) = (uₓ+vₓ)²/(u_{y}+v_{y})², where (uₓ,u_{y}) are respectively first and second spatial coordinates of said first vector u = (Pᵢ₋₁,ₜ₊₁,Pᵢ,ₜ₊₁) and (Vₓ,V_{y}) are respectively first and second spatial coordinates of said second vector v = (P_{i,t+1},P_{i+1,t+1}).

According to another feature, one of said elementary energy comprises a flow energy expressed by a spatial distance between a point and its image, according to the formula E_{flow}(i,t)= dₛ(P_{i,t},P_{i,t+1}).

According to another feature, one of said elementary energy comprises a colour energy expressed by a colour distance between a point and its image, according to the formula E_{colour}(i,t) = d_{c}(P_{i,t},P_{i,t+1}).

According to another feature, one of said elementary energy comprises a stability energy expressed by a spatial distance between a point and the end of the longest segment of uniform colour starting from said point, according to the formula E_{stab}(i,t) = dₛ(P_{i,t},P_{ext,i,t}).

According to another feature, said spatial distance may be expressed by dₛ(P₁,P₂) = dₛ((x₁,y₁),(x₂,y₂)) = [(x₁-x₂)² + (y₁-y₂)²]^{1/2}, where (x₁,y₁), respectively (x₂,y₂), are spatial coordinates of point P₁, respectively of point P₂.

According to another feature, said colour distance may be expressed by d_{c}(P₁,P₂) = d_{c}((L₁,a₁,b₁),(L₂,a₂,b₂)) = [k_{L}(L₁-L₂) ² + kₐ(a₁-a₂)² + k_{b}(b₁-b₂)²]^{1/2}, where (L₁,a_{1,}bᵢ), respectively (L₂,a₂,b₂), are colorimetric coordinates of point P₁ respectively of point P₂, in a L*a*b colorimetric model, and k_{L}, kₐ, k_{b} are weights used for each respective coordinate.

According to another feature, said weights are dynamically adapted, relatively increasing the weight of the energy flow proportionally to a length of a longest segment of uniform colour starting from said point.

According to another feature, said propagating step further comprises displaying said at least one drawn or propagated scribble over the corresponding image.

According to another feature, said propagating step further comprises allowing the user to correct any of said at least one scribble.

According to another feature, the propagating step and the extracting step are done by two separate processes.

Another objet of an embodiment is a system comprising means to implement the steps of the method according to any one of the previous embodiments.

Said system is advantageously parted into two separate processing segments: a user segment in charge of the scribble propagation and a server segment in charge of the object extraction.

Another objet of an embodiment is a computer software executing the steps of such a method.

Others features, details and advantages of the invention will become more apparent from the detailed illustrating description given hereafter with respect to the drawings on which:
- figure 1 is a illustrative video sequence with some scribbles drawn or propagated through the images,
- figure 2 details the use of energies in the propagation,
- figure 3 shows a global flow chart of an embodiment of a system implementing the video extracting method,
- figure 4 is explaining an image extracting method.

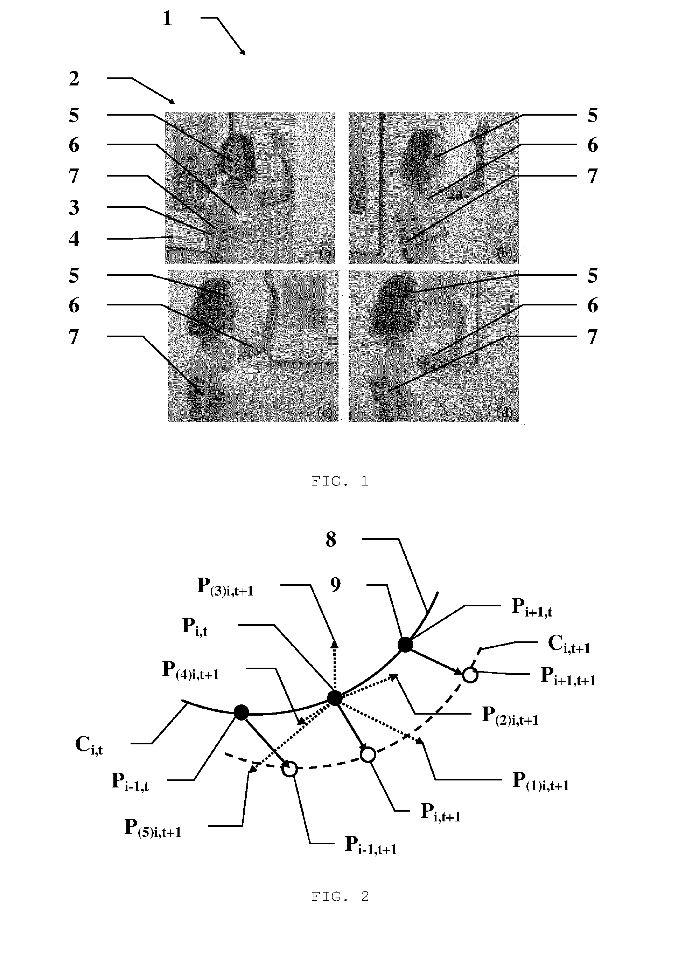

The aim of the invention is to extract a foreground object 3 from a video sequence 1. Illustrated in figure 1 is a simplified video sequence 1, comprising four images 2. Said images 2 are comprised in the same video sequence 1 and are timely ordered a, b, c, d. Said video sequence 1 shows a character 3 moving in front of a background 4. Let us consider, that the user of the method wants to extract a foreground object 3, e.g. said character 3, from the video sequence 1.

To do such an extraction, the user uses an authoring method / system. According to an embodiment, said authoring method comprises the following steps. First, the video sequence 1 is displayed to the attention of the user. Since the extracting method/system can be implemented on any computer system, the video sequence can be displayed e.g. on a graphical display.

Advantageously, the method is computationally light enough to be implemented on a light computer system such as a smartphone or a portable pad.

For convenience, and in order the user can rightly point the object 3 in next step, said display can advantageously be managed by usual video sequence tools, as for a VCR, comprising normal display, reverse, slow motion, image by image displays.

On said displayed video sequence 1, and advantageously on a first image 2, the user can point an object 3 the user wants to extract from the background 4. Since, a quick pointing method is preferred, said pointing is done by roughly drawing at least one scribble over the object 3. Some samples of scribbles 5, 6, 7 can be seen in figure 1.

A scribble 5-7 broadly designates an object 3. The only constraint is that the scribble 5-7 must be wholly contained in the object 3. But on the contrary, the scribble does not have to fully cover the object 3.

Scribbles 5-7 are only intended to help an image extracting process, as will be more visible in a later part describing the image extracting process in detail. One of the advantages of the method is the fact that no fine work is needed and a rough scribbling is sufficient to point a candidate object 3.

Moreover the scribbling action appears to be a very natural and intuitive way of designating a displayed object 3.

Accordingly, the pointing step can, most of the time, be applied in real time by a user, over a video sequence 1 displayed at normal speed of e.g. 25 images per second.

Such a scribbling/pointing action can be done by any pointing means, such as a mouse, a joystick, or directly on a display screen equipped with a tactical screen, touching it either directly with a digit or with a stylus.

Several scribbles 5-7 can be used, as the user considers convenient, to rightly point a given object 3.

Referring again to figure 1, one can see a first scribble 5 drawn over the face of the object 3. A second scribble 6 is drawn over both the torso and the left arm of the object 3. Finally a third scribble 7 is drawn over the right arm of the object 3.

One could imagine, reproducing said pointing step over each image 2 of the video sequence 1. But such a process would rapidly become boring for the user.

Instead, according to an essential step of the proposed extracting method, the at least one scribble 5-7 drawn on a given initial image 2 is automatically propagated through the successive images 2 of said video sequence 1.

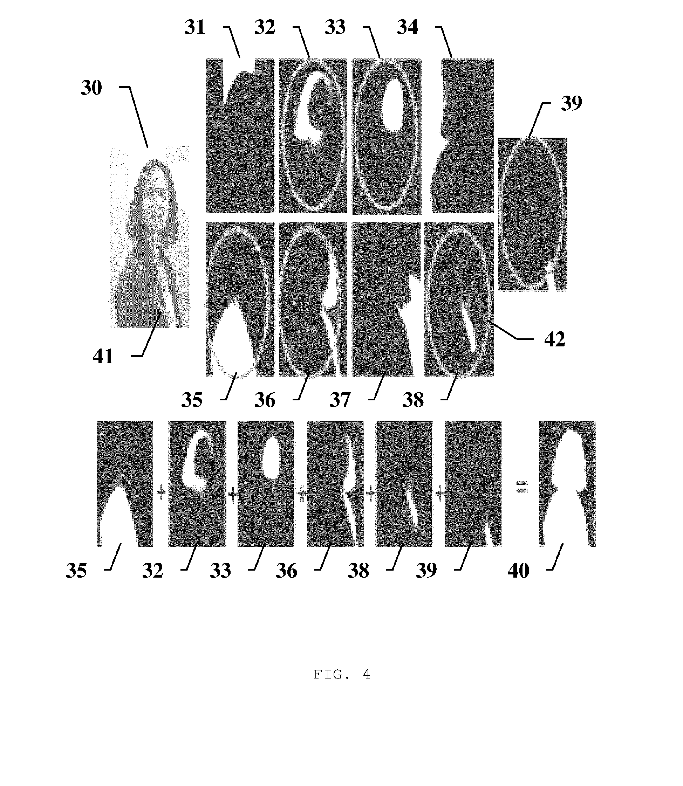

By doing so, in each image a-d of the video sequence 1, the object 3 is pointed by its at least one scribble 5-7, be it drawn scribble(s), as in the initial image a, or propagated scribble(s), as in the following images b-d. Thus the image extracting process can process to the extraction of said object 3, as will be now explained with reference to figure 4.

It must be understood that any image extracting method can be used. The one described here is only indicative, but is a method that takes a great benefit of the constraint provided by a scribble 5-7, and thus is perfectly adapted to the video sequence extracting method described herein.

One can differentiate an image extracting method in which an object 3 to extract must be (re) defined for each image 2, from a video sequence extracting method in which an object 3 to extract is mainly defined once in an initial image, and where the image flow is advantageously used to automatically find said object through the images 2 of the video sequence 1.

Starting from an original image 30, a first step decomposes it in an arbitrary number, here nine, of elementary masks 31-39. Each elementary mask 31-39 is an "intensity" mask, that is, an array of the image size, where each "pixel" is allocated an "intensity" value ranging from 0 to N.

Here, for comprehensive display purpose, each mask 31-39 is displayed as an image with the "intensity" value figured as a grey level, where 0 is black and N is full white. Thus when a mask 31-39 is applied to the original image 30, the intensity of each pixel of the image 30 is multiplied by said "intensity" value, and provides a partial image.

Each such mask 31-39 is determined so that the partial image so provided corresponds to a homogeneous area of the original image 30, as can be seen on figure 4.

According to an important feature, said decomposition into a number of elementary masks 31-39 is a partition, that is, the sum of all mask values equal N for all pixels.

Here it must be noted, that the use of a non-binary intensity, as in some extraction methods, allows for a smooth transition between two partial neighbouring areas of the image 30. This can be seen, e.g. for the hair boundary of the character in masks 32 or 34.

This feature provides better results when applied to an object 3 to extract. Especially the object 3 is better delineated from the background 4 and is thus better suited to be later superimposed over a new different background.

Once said partition into a number of elementary masks 31-39 is done, there exists some automatic methods to determine the object to extract. However, such an extracting method is far more efficient when it takes benefit of a constraint given e.g. by at least one scribble 41.

Such an at least one scribble 41 is provided here for said original image 30. According to the video sequence extracting method said scribble 41 has been either drawn by the user, if the original image 30 is an initial image a, or has been propagated, if the original image 30 is a following image b-d in a video sequence 1.

Starting from said elementary masks 31-39, the image extracting process carries on, checking for each elementary mask 31-39, if it contains, at least partially, a piece of said at least one scribble 41. If an elementary mask 31-39 is overwritten by at least a point from at least one of the scribble 41, said mask 31-39 is kept. If not, it is rejected.

Said kept elementary masks are then gathered and summed to provide a final mask 40 that determine the object to extract, and that can be used to mask the original image 30 to provide the extracted object.

In the example of figure 4, the elementary masks lying under at least one scribble 41 are indicated by an oval 42. These masks are the 35, 32, 33, 36, 38, 39. When gathered and summed, as figured on the bottom line of figure 4, they provide a final mask 40, delineating the object to extract, that is, the scribbled character in image 30.

Said image extracting method can be easily applied to a video sequence 1 so as to produce a video sequence extracting method, as soon as each image 2 from a video sequence 1 is scribbled. The initial image is scribbled by the user, then the at least one scribble 5-7 is propagated automatically through the video sequence 1.

The propagation is an important step of the method. It comprises the following steps.

First the first at least one scribble drawn by the user on the initial image 2 is discretized into a set Cᵢ,ₜ of points P_{i,t}. Said step depends on the form of scribbles, as provided by the man machine interface used by the user to draw the scribbles 5-7. Said interface may either provide a curve, e.g. a cubic spline. In that case said curve is discretized into a set C_{i,t} of points P_{i,t}. Or said interface may directly provide a set C_{i,t} of points P_{i,t}, in which case said discretizing step is already done per se.

In said set C_{i,t} of points P_{i,t}, the index i is a spatial index and describes all the scribble points in one image 2, and the index t is a temporal index and describes the time, that is the image It at each instant t through the video sequence 1. From said set C_{i,t} of points P_{i,t}, populated at least at time/image t, the propagation step derives, for each point P_{i,t} in said set C_{i,t}, a new position point P_{i,t+1} in the next image Iₜ₊₁ in said video sequence 1. Thus a set C_{i,t} of points is propagated into a set C_{i,t+1}.

Said new position point P_{i,t+1} is determined by selecting the point P_{i,t+1} that minimizes a global energy function E_{global} · According to an embodiment said energy function E_{global} is expressed as a weighted sum of at least one elementary energy Eⱼ, where the weights are correspondingly denoted ωⱼ, according to the formula E_{global} (P_{i,t+1}P_{i,t}) = Σ ωⱼ.Eⱼ.

Said propagating step determines, from the scribbles 5-7 figured by set C_{i,t} in image It at instant t, point by point, the resulting scribbles figured by set C_{i,t+1} in the next image Iₜ₊₁.

A this point, if necessary, the set C_{i,t+1} of propagated points P_{i,t+1} can be modelled in a curve.

The method carries on onto the next image Iₜ₊₂, by recursively applying the same propagating step over the obtained set C_{i,t+1} of points P_{i,t+1} to obtain the next set C_{i,t+2} of points P_{i,t+2}, figuring the scribbles for the next image Iₜ₊₂.

This process can be repeated recursively through the successive following images 2 of said video sequence 1, or until the user decides to stop it before.

Elementary energies Eⱼ are a convenient and intuitive mean to express different trends that may impact the propagation of a scribble point, while trying to follow an object 3 in an image 2. It is intended here to automatically propagate a scribble 5-7 so that it rightly stays within said object 3.

To do so at least one elementary energy Eⱼ may be used. However several such elementary energies Eⱼ together may better express a physical reality by having each elementary energy Eⱼ modelling a trend, all trends cooperating to provide a right behaviour of the scribble.

Figure 2 explains notations used. In an image It at time t, at least one scribble 5-7 is modelled by a set C_{i,t} of points P_{i,t}. Said points are spatially ordered along a scribble/curve, according to an ordered i index. A given point P_{i,t} has a spatial antecedent P_{i-1,t} and a spatial successor P_{i+1,t}. Said point P_{i,t} is propagated into an image point P_{i,t+1} in the next image Iₜ₊₁ at time t+1. Since propagation may use several energies, points P_{(k)i,t+1} with k={1..5} are figuring the image point of P_{i,t} if only energy Eₖ were used. The final image point P_{i,t+1} then results from the contributions of all energies.

Accordingly, point P_{i-1,t} is propagated into an image point P_{i-1,t+1} and point P_{i+1,t} is propagated into an image point P_{i+1,t+1}. Point P_{i-1,t+1} is the spatial antecedent of P_{i,t+1}. Point P_{i+1,t+1} is the spatial successor of P_{i,t+1}. All these points P_{i-1,t+1},P_{i,t+1},P_{i+1,t+1} pertain to the propagated set C_{i,t+1} corresponding to image Iₜ₊₁.

A possible elementary energy is a uniformity energy E_{unif}. Such an energy E_{unif} is intended to limit the excursion of a point away from the curve.

To get such a result, a uniformity energy E_{unif} computes a spatial distance between a point P_{i,t+1} and the spatial successor P_{i+1,t+1} of said point P_{i,t+1} in the set C_{i,t+1} of points. Out off all the distances so computed through an image Iₜ₊₁ at instant t+1, for all points P_{j,t+1,} an spatial average of said distance is determined by having an index j spanning said spatial index i, by averaging all distances between a point P_{i,t+1} and its spatial successor P_{i+1,t+1} in the set C_{i,t+1}. Then for each point P_{i,t+1} its distance to its spatial successor P_{i+1,t+1} is compared by subtracting it from said spatial average distance. The uniformity energy E_{unif} can thus be expressed according to the formula E_{unif}(i,t) = Avg_{j=∀i}(dₛ(P_{i,t+1},P_{i+1,t+1})) - dₛ(P_{i,t+1},P_{i+1,t+1}).

Another possible elementary energy is a curvilinear energy E_{curv}. Such an energy E_{curv} is intended to control the curvature of the curve.

To get such a result, a curvilinear energy E_{curv} is expressed by "cross computing" two vectors u, v. The first vector u is a vector ending on a given point P_{i,t+1}. Said first vector u joins a spatial antecedent P_{i-1,t+1} of a point P_{i,t+1} to said point P_{i,t+1}. The second vector v is a vector starting from said point P_{i,t+1}. Said second vector v joins said point P_{i,t+1} to its spatial successor P_{i+1,t+1}. Said two vectors u and v are "cross computed" by square summing the respective first spatial coordinate Uₓ of first vector u and Vₓ of second vector v and then divide the result by the squared sum of the respective second spatial coordinate u_{y} of first vector u and v_{y} of second vector v.

The curvilinear energy E_{curv} can thus be expressed by the formula E_{curv}(i,t) = (uₓ+vₓ)²/(u_{y}+v_{y})², where (u_{x,}u_{y}) are respectively first, that is e.g. abscissa, and second, that is e.g. ordinate, spatial coordinates of vector u = (P_{i- 1,t+1},P_{i,t+1}) and (vₓ,v_{y}) are respectively first and second spatial coordinates of vector v = (P_{i,t+1},P_{i+1,t+1}).

In the current description, the spatial antecedent is the point P_{i-1,t+1}, preceding said point P_{i,t+1} in the set C_{i,t+1} of points. The spatial successor is the point P_{i+1,t+1}, following said point P_{i,t+1} in the set C_{i,t+1} of points. Otherwise said, spatial antecedent point P_{i-1,t+1} and spatial successor point P_{i+1,t+1} are both neighbours of point P_{i,t+1} in a scribble/curve.

The two preceding energies are typical of a classical active contours algorithm.

The three energies described now are more specific of the particular extraction/propagation problem to which they are particularly suitable.

Another possible elementary energy is a flow energy E_{flow}. Such a flow energy E_{flow} is intended to model the fact that an object 3 generally does not move too quickly in a video sequence 1. Such a flow energy E_{flow} thus acts as an inertial weight tending to maintain a point immobile. Such a flow energy E_{flow} can be simply expressed by a spatial distance, according to the formula: E_{flow}(i,t) = dₛ(P_{i,t},P_{i,t+1}). Since said flow energy is minimized, this tends to maintain a point P_{i,t} where it is, thus choosing a point P_{i,t+1} as close as possible.

Another possible elementary energy is a colour energy E_{colour}. Such a colour energy E_{colour} is intended to figure the fact that an object 3, even moving along the video sequence 1, generally maintains its colour. Since a scribble points normally sticks to an object 3, the same applies to its colour. Such a colour stability, even under some tolerance, can be expressed by a colour distance, according to the formula: Eₑₒₗₒᵤᵣ(i,t) = d_{c}(P_{i,t},P_{i,t+1}). Since said colour energy is minimized, this tends to attract a point P_{i,t} to a point P_{i,t+1} with the closest colour possible.

Another possible elementary energy is a stability energy E_{stab}. Such a stability energy E_{stab} derives from the fact that a scribble 5-7, as drawn by a user, tends to be well within the middle zones of different object's regions, or in other words distant from the boundaries of object 3. This is a property of a scribble 5-7 that must be kept when propagating. The aim of said stability energy E_{stab} is to pull the point toward the "centre" of the object, away from detected boundaries.

One possible embodiment to do this is the following. The region around a point P_{i,t} is analysed in order to detect local homogeneity around the point, normally to the curve. Homogeneity is here detected based on the colour. Homogeneity according to an embodiment is measured by considering segments of uniform colour, starting from said considered point P_{i,t}. To simplify such segments are considered only along a given direction, such as, e.g. the direction orthogonal to the curve at point P_{i,t}, that is, the normal. By doing so two segments can be found starting from a given point P_{i,t}. Among these two segments, the longest one, that is the longest segment Sᵢ of uniform colour, of length LSᵢ, is kept. Uniformity of the colour can be here considered with a small tolerance threshold, in order to take into account some possible noise in the image 2 of the video sequence 1. Said longest segment Sᵢ of uniform colour, which is also known as a similarity line segment, can e.g. be determined by an area growing algorithm, known by a one skilled in the art.

The longest segment determines one direction among the two. The extremity of such a longest segment Sᵢ is called P_{ext,i,t}. The stability energy E_{stab} tends to pull the point P_{i,t} toward the point P_{ext,i,t}. Otherwise said, the stability energy E_{stab} can be expressed by a spatial distance between P_{i,t} and P_{ext,i,t}, according to the formula E_{stab}(i,t) = dₛ(P_{i,t},P_{ext,i,t}).

So, minimizing said stability energy E_{stab} tends to pull the point P_{i,t} toward the point P_{ext,i,t}, and thus toward an area of greater homogeneity.

With respect to the previous energies, said spatial distance dₛ may be expressed by any known spatial distance. E.g. it can be a Euclidian distance. Said spatial distance dₛ can then be expressed by : the distance between two points P₁,P₂, defined by their respective spatial coordinates (x₁,y₁) and (x₂,y₂), in a same Cartesian space, is dₛ(P₁,P₂) = dₛ((x₁,y₁), (x₂,y₂)) = [(x₁-x₂)² + (y₁-y₂)²]^{1/2}.

Accordingly, said colour distance d_{c} may be expressed by any known colour distance. E.g. it can be a weighted Euclidian distance expressed in a given colorimetric space. Said colour distance d_{c} can then be expressed by: the distance between two points P_{1,} P₂, defined by their colorimetric coordinates (L₁,a₁,b₁), and respectively (L₂,a₂,b₂) in a L*a*b colorimetric model/space, as defined by CIE, is d_{c}(P₁,P₂) = d_{c}((L₁,a₁,b₁), (L₂,a₂,b₂)) = [k_{L}(L₁-L₂)² + kₐ(a₁-a₂)² + k_{b}(b₁-b₂)²]^{1/2}. In the previous formula, k_{L}, kₐ, k_{b} are weights used for each respective coordinate. Since a and b are figuring color tints and L is figuring intensity, the following values k_{L}=1/4, kₐ = k_{b} = 1 give a good result. As a matter of fact said values advantageously greatly reduce the prejudicial effects of contrast change often found in video sequences.

According to a first embodiment, a, b, and L coordinates are considered for a given point itself. Alternately, according to another embodiment, a, b, and L coordinates can be determined by spatially averaging their respective values over a neighbouring area around said given point.

According to a preferred embodiment, said neighbouring area can advantageously be taken along a similarity line segment Sᵢ, as previously defined.

By using any of these elementary energies or others energies a person skilled in the art would derives from them, a global energy E_{global} can be built by summing these elementary energies. This sum can advantageously be weighted in order to change the relative importance of one energy with respect to the other ones.

As mentioned before, said energy function E_{global} is thus expressed as a weighted sum of at least one elementary energy Eⱼ, where the weights are correspondingly denoted ωⱼ, according to the formula E_{global} (P_{i,t+1},P_{i,t}) = Σ ωⱼ.Eⱼ.

E.g. when the five described elementary energies are used, the formula becomes E_{global} (P_{i,t+1},P_{i,t}) = Σ ωⱼ.Eⱼ = ω_{unif}.E_{unif} + ω_{curv}.E_{curv} + ω_{flow}.E_{flow} + ω_{colour}.E_{colour} + ω_{stab}·E_{stab}

Thus a propagating means, participating to a video sequence extracting method, can be trimmed, by changing said weights ωⱼ, until a satisfactory behaviour of the propagation means is obtained, e.g. by trial and error.

As an example, the following set of weights has been found to provide good results: ω_{unif}=0.45, ω_{curv}=0.6, ω_{flow}=1.1, ω_{colour}= 0.5, ω_{stab}= 0.5.

According to another embodiment, these weights ωⱼ can be dynamically adapted, that is, recomputed depending on the parameters.

According to a particular embodiment, such a dynamic adaptation can be the following.

Here the adaptation of the weights ωⱼ is directed to change, point by point the set of weights ωⱼ and particularly the last three relative weights: ω_{flow}, ω_{colour} and ω_{stab} depending on the point P_{i,t} location and especially depending on the area colour or homogeneity around said point P_{i,t}.

The goal here is to create a repulsive effect for a point P_{i,t} coming near a contour of the object 3. This can be done by noticing that when the length LSᵢ of the longest segment Sᵢ, as previously computed for the stability energy E_{stab}, becomes small, the probability that the point P_{i,t} is coming near a boundary of the object 3 is high. Accordingly, to correct this, a greater confidence, and thus a greater weight, could be given to the flow energy E_{flow}. Thus the corresponding weight ω_{flow} can be increased proportionally to a decrease of the length LSᵢ of the longest segment Sᵢ.

This can be done, e.g. by decreasing the two other weights ω_{colour} and ω_{stab} accordingly. So, if the two first weight ω_{unif} and ω_{curv} are left unchanged, the global energy E_{global} can be expressed by the following formula: E_{global} (P_{i,t+1},P_{i,t}) = ω_{unif}.E_{unif} + ω_{curv}.E_{curv} + (1-LSᵢ).ω_{flow}·E_{flow} + LSᵢ.ω_{colour}.E_{colour} + LSᵢ.ω_{stab}.E_{stab}. In practice, the lengths of all similarity segments LSᵢ among the points P_{i,t} pertaining to a same scribble 5-7, can be normalized by the maximum length and the formula becomes: E_{global}(P_{i,t+1},P_{i,t}) = ω_{unif}.E_{unif} + ω_{curv}.E_{curv} + ((1-LSᵢ)/max(LSᵢ)). ω_{flow}.E_{flow} + LS_{i/}max(LSᵢ). ω_{colour}.E_{colour} + LSᵢ/max(LSᵢ). ω_{stab}.E_{stab}.

Once the propagation is done, according to another important feature, the propagated scribbles 5-7 can advantageously be displayed over the object 3, while any corresponding image 2 of the video sequence 1 is displayed. The corresponding image 2 is here the image 2 associated to a given scribble 5-7.

Such a display has the advantage of showing to the user the result of its scribbling action, helping said user to rightly point an object 3. Since this process can be applied in real time, the user gets an immediate feedback. The user can thus check the propagation of the scribbles 5-7, e.g. by basically verifying that said scribbles 5-7 stay in the object 3 the user wanted to point.

Moreover, by showing to the user the result of its scribbling action, the user is allowed to interactively adapt its scribbling, by either moving or redrawing a scribble or by adding an additional scribble to e.g. extend an extracted object, if it appears that e.g. a part of said extracted object 3 is missing in the extraction step.

In accordance with the last rendering step, the propagating step allows the user to interactively correct any of said at least one scribble 5-7, either by editing at least one of them or by adding or removing one of them.

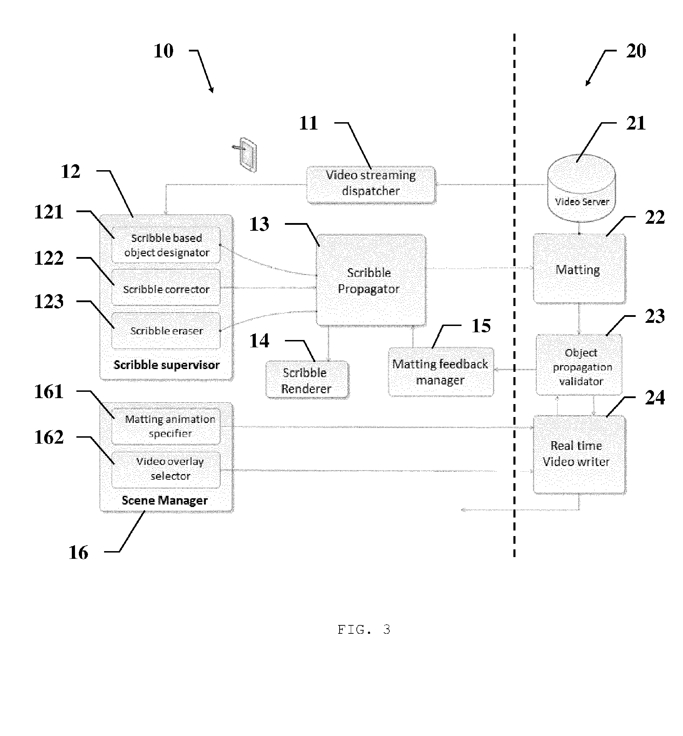

The present invention also concerns a system comprising means to implement the steps of such a method. A possible implementation of such a system is illustrated in figure 3.

The system is parted into two main processing segments: a server segment 20 ran on e.g. a network server, figured on the right, and a client/user segment 10 typically ran on a user equipment, such as a portable device: smartphone, pad, or equivalent, figured on the left.

Such a partition is important in that it allows the implementation of the method on a small computing power device, such as a user device. This is possible because the method is divided into lighter steps, mainly concerning the scribbling of the object 3 to extract, that can be implemented on a user device, and heavier steps, mainly concerning the extraction of the object 3, that can advantageously be implemented on a more powerful network server.

A video server 21 provides a video sequence 1 to a video sequence displayer 11. The system further comprises a scribble supervisor 12 in charge of providing editing and modifying means to the user to define the scribbles 5-7. Said scribble supervisor 12 further comprises a scribble object designator 121, in charge of defining, from the user's input, the drawn scribbles 5-7, a scribble corrector 122 allowing the user to modify a scribble 5-7, be it a drawn scribble or a propagated scribble, and a scribble eraser 123 allowing a user to delete a scribble 5-7.

Said scribble supervisor 12 feeds a scribble propagator 13 with the drawn scribbles. Said scribble propagator 13 propagates the scribbles 5-7 through the images 2 of the video sequence 1, and may return back to the scribble supervisor 12 the so obtained propagated scribbles 5-7, for them to be either modified or erased.

The scribble propagator 13 also provides a scribble renderer 14 with said scribbles 5-7, in order to have them displayed over the object 3 in images 2 of the displayed video sequence 1, so that the user can interactively checks the result of the propagation on scribbles 5-7.

The scribble propagator 13 also provides said scribbles 5-7 to an extracting/matting module 22. Said extracting module 22, also receive the video sequence 1 from the video server 21. It is in charge of extracting a scribbled object 3 from an image 2 of the video sequence 1 based on said at least one scribbles 5-7 provided. Since the extracting 22 process can be resource consuming, it is advantageously deported and realized on server segment 20, instead than on user segment 10.

The system can also comprise a propagation object validator 23. The principle of such a validator 23 is to check that an object 3 extracted from an image Iₜ₊₁ at instant t+1 does not differs too much from the corresponding object 3 extracted from the preceding image It at instant t.

Such a propagation object validator 23 can be implemented by any valuated comparison of two objects method, such as a distance between the images comprising the extracted objects 3. One sample of such a valuated comparison method is the Hausdorff distance as described e.g. in: "D. Huttenlocher and W. Rucklidge. A multi-resolution technique for comparing images using the Hausdorff distance. IEEE Conference on CVPR, pages 705-706,1993".

The system can also comprise an extraction feedback manager 15 in charge of warning the user when the previous propagation object validator 23 detects a too important difference between an object extracted at instant t+1 and an object extracted at instant t. Such a warning is then a opportunity for the user to amend the scribbles 5-7, by modifying at least one of them or even add at least one more scribble, in order said scribbles better point the intended object 3 to extract.

Figure 3 further shows a scene manager 16, comprising an animation specifier 161 and an overlay selector 162. Said scene manager 16 dialogs with a video writer 24 to define and realize a new video sequence, by replacing an extracted object 3 on overlay over another background.

## Claims

1. An authoring method, for extracting a foreground object (3) from a video sequence (1) ***characterized in that*** it comprises the following steps:
- displaying an image (2) of said video sequence (1) to a user,
- pointing said foreground object (3) to extract by detecting the user drawing at least one scribble (5-7) onto said object (3),
- propagating said at least one scribble (5-7) through each successive image (2) of said video sequence (1),
- using said at least one drawn or propagated scribble (5-7) to constraint an extraction of said pointed foreground object (3) from each said successive image (2).

2. The method of claim **1,** wherein said propagating step comprises:
- discretizing a scribble (5-7) into a set (C_{i,t}) of points,
- estimating a new position (P_{i,t+1}) for each point (P_{i,t}) in said set (C_{i,t}) of points in the next image (Iₜ₊₁) of said video sequence (1), by selecting the point (P_{i,t+1}) that minimizes a global energy function (E_{global}), expressed as a sum of at least one elementary energy (Eⱼ) weighted by weights (ωⱼ),
- repeating said estimating step recursively through the following successive images (2) of said video sequence (1).

3. The method of claim **2,** wherein one of said elementary energy comprises a uniformity energy (E_{unif}) expressed by comparing a spatial distance between a point (P_{i,t+1}) and its spatial successor (P_{i+1,t+1}) in said set (C_{i,t+1}) of points with the average value of the distance between two spatially successive points (P_{i,t+1}) and (P_{i+1,t+1}) in said set (C_{i,t+1}) of points, according to the formula E_{unif}(i,t) = Avg_{j=∀i} (dₛ(P_{j,t+1},P_{j+1,t+1})) - dₛ(P_{i,t+1},P_{i+1,t+1}).

4. The method of claim **2** or **3,** wherein one of said elementary energy comprises a curvilinear energy (E_{curv}) expressed by the squared sum of a first spatial coordinate (uₓ) of a first vector (u) joining a spatial antecedent (P_{i-1,t+1}) of a point (P_{i,t+1}) to said point (P_{i,t+1}) and a first spatial coordinates (vₓ) of a second vector (v) joining said point (P_{i,t+1}) to its spatial successor (P_{i+1,t+1}), divided by the squared sum of a second spatial coordinate (u_{y}) of said first vector (u) and a second spatial coordinate (v_{y}) of said second vector (v), according to the formula E_{curv}(i,t) = (uₓ+vₓ)²/(u_{y}+v_{y})², where (uₓ,u_{y}) are respectively first and second spatial coordinates of said first vector u = (P_{i-1,t+1},P_{i,t+1}) and (vₓ,v_{y}) are respectively first and second spatial coordinates of said second vector v = (P_{i,t+1},P_{i+1,t+1}).

5. The method of any one of claims **2** to **4,** wherein one of said elementary energy comprises a flow energy (E_{flow}) expressed by a spatial distance between a point (P_{i,t}) and its image (P_{i,t+1}), according to the formula E_{flow}(i,t) = dₛ(P_{i,t},P_{i,t+1}).

6. The method of any one of claims **2** to **5,** wherein one of said elementary energy comprises a colour energy (E_{colour}) expressed by a colour distance between a point (P_{i,t}) and its image (P_{i,t+1}), according to the formula E_{colour}(i,t) = d_{c}(P_{i,t},P_{i,t+1}).

7. The method of any one of claims **2** to **6,** wherein one of said elementary energy comprises a stability energy (E_{stab}) expressed by a spatial distance between a point (P_{i,t}) and the end (P_{ext,i,t}) of the longest segment (Sᵢ) of uniform colour starting from said point (P_{i,t}), according to the formula E_{stab}(i,t) = dₛ(P_{i,t},P_{ext,i,t}).

8. The method of any one of claims **3** to **7,** wherein said spatial distance (dₛ) may be expressed by dₛ(P₁,P₂) = dₛ((x₁,y₁), (x₂,y₂)) = [(x₁-x₂)² + (y₁-y₂)²]^{1/2}, where (x₁,y₁), respectively (x₂, y₂), are spatial coordinates of point P₁, respectively of point P₂.

9. The method of any one of claims **3** to **8,** wherein said colour distance (d_{c}) may be expressed by d_{c}(P₁,P₂) = d_{c}((L₁,a₁,b₁) (L₂,a₂,b₂)) = [k_{L}(L₁-L₂) ² + kₐ(a₁-a₂) ² + k_{b}(b₁-b₂)²]^{1/2}, where (L₁,a₁,b₁), respectively (L₂,a₂,b₂), are colorimetric coordinates of point P₁ respectively of point P₂, in a L*a*b colorimetric model, and k_{L}, kₐ, k_{b} are weights used for each respective coordinate.

10. The method of any one of claims **2** to **9,** wherein said weights (ωⱼ) are dynamically adapted, relatively increasing the weight (ω_{flow}) of the energy flow (E_{flow}) proportionally to a length (LSᵢ) of a longest segment (Sᵢ) of uniform colour starting from said point (Pi,t).

11. The method of any one of claims **1** to **10,** wherein said propagating step further comprises displaying said at least one drawn or propagated scribble (5-7) over the corresponding image (2).

12. The method of any one of claims **1** to **11,** wherein said propagating step further comprises allowing the user to correct any of said at least one scribble (5-7).

13. The method of any one of claims **1** to **12,** wherein the propagating step and the extracting step are done by two separate processes.

14. A system, ***characterized in that*** it comprises means to implement the steps of the method according to any one of claims **1** to **13.**

15. The system of claim **14,** parted into two separate processing segments: a user segment in charge of the scribble propagation and a server segment in charge of the object extraction.

16. A computer software, stored on a non-transitory medium, comprising computer readable instructions which when executed on at least one computer realize the steps of the method according to any one of claims **1** to **13.**
